# EUROPEAN PATENT APPLICATION

(11) **EP 4 473 856 A1**
(43) Date of publication of application: **11.12.2024**
(21) Application number: 24180542.3
(22) Date of filing: 06.06.2024
(51) Int. Cl.: A41H 3/00, D05B 19/08, D05B 19/10, G06F 8/34, G06F 30/20, G06F 40/117, G06T 19/00

(54) **METHOD AND APPARATUS FOR AUTOMATIC SEWING SIMULATION**

(30) Priority: 07.06.2023 US 202363506595 P; 10.05.2024 KR 20240062071
(71) Applicant: CLO Virtual Fashion Inc., Seoul 06236 (KR)
(72) Inventor: MA, Jaehwan, 06236 Seoul (KR); CHOI, MoonSeok, 06236 Seoul (KR); GATTA, Phoebe, New York, 10007 (US)
(74) Representative: V.O.

(57) **Abstract**

An automatic sewing simulation method is provided. The method includes obtaining pattern pieces and placement information of a three-dimensional (3D) virtual garment, generating pattern blocks from the pattern pieces based on a pattern block generation input of a user for the pattern pieces, generating a sewing tag for the pattern blocks in response to the pattern block generation input of the user, and performing automatic sewing between the pattern blocks based on the sewing tag.

## Description

### CROSS-REFERENCE TO RELATED APPLICATIONS

This application claims priority to and the benefit of U.S. Provisional Application No. 63/506,595 filed on June 7, 2023; and Republic of Korea Patent Application No. 10-2024-0062071 filed on May 10, 2024, the entire disclosures of which are incorporated herein by reference for all purposes.

### BACKGROUND

### 1. Field of the Invention

One or more embodiments relate to a method and apparatus for an automatic sewing simulation.

### 2. Description of the Related Art

A garment appears to be three dimensional (3D) when worn on a person's body but is more two dimensional (2D) because the garment is actually a combination of pieces of fabric cut according to a 2D pattern. Fabric, which is a material for a garment, is flexible and accordingly, a shape of the fabric may vary depending on a body shape or movement of a person wearing the garment.

To simulate a garment, a pattern may need to be sewn. However, sewing between patterns often requires numerous manual inputs and may thus be costly and time-consuming. Therefore, there may be a need for a simulation method to increase efficiency in garment simulation and reduce errors in a manual input.

### SUMMARY

According to an aspect, there is provided an automatic sewing simulation method including obtaining pattern pieces and placement information of a three-dimensional (3D) virtual garment, generating pattern blocks from the pattern pieces based on a pattern block generation input of a user for the pattern pieces, generating a sewing tag for the pattern blocks in response to the pattern block generation input of the user, and performing automatic sewing between the pattern blocks based on the sewing tag.

In one or more embodiments, the obtaining of the pattern pieces and the placement information may include displaying two-dimensional (2D) pattern pieces corresponding to a result of simulation performed in a state in which the 3D virtual garment is worn.

In one or more embodiments, the method may further include generating a pattern block type based on a pattern block type generation input of the user.

In one or more embodiments, the pattern block generation input of the user may include a specified input of the user specifying a pattern block type for each of the pattern pieces.

In one or more embodiments, the generating of the pattern blocks may include updating a pattern block list in response to a pattern editing input of the user that adds a new pattern piece or replaces at least one of the pattern pieces with another pattern piece.

In one or more embodiments, the generating of the sewing tag may include assigning the sewing tag to each of the pattern blocks based on a predefined tagging method.

In one or more embodiments, the assigning of the sewing tag may include confirming, based on sewing relationship information of the pattern pieces and information on pattern blocks to which the pattern pieces belong, sewing relationship information of the pattern blocks and assigning the sewing tag to an edge area of the pattern blocks based on the sewing relationship information of the pattern blocks.

In one or more embodiments, the sewing relationship information of the pattern blocks may include information for identifying pattern blocks, on which sewing between the pattern blocks is to be performed, as a pair and information for setting an edge area of the pattern blocks identified as being paired as an associated sewing tag.

In one or more embodiments, the predefined tagging method may be a method that includes a processing rule for adjusting a number of sewing lines on which sewing between the pattern blocks is to be performed.

In one or more embodiments, the predefined tagging method may include a direction rule for adjusting a direction in which sewing between the pattern blocks is to be performed.

In one or more embodiments, the performing of the automatic sewing may include performing the automatic sewing between target pattern blocks, among the pattern blocks, on which sewing is performed, in response to a pattern block editing input of the user that adds a new pattern or replaces a portion of the pattern blocks.

According to an aspect, there is provided a simulation device including a memory configured to store instructions, an output device configured to display a user interface, a processor, wherein the instructions, when executed by the processor, cause the simulation device to receive pattern pieces generated based on placement information of a 3D virtual garment, generate pattern blocks from the pattern pieces based on an input of a user for the pattern pieces, generate a sewing tag for the pattern blocks based on the input of the user, and perform automatic sewing between the pattern blocks based on the sewing tag.

According to an aspect, there is provided a server including a memory configured to store instructions and a processor, wherein the instructions, when executed by the processor, cause the server to receive, from a simulation device, pattern pieces generated based on placement information of a three-dimensional (3D) virtual garment, generate pattern blocks from the pattern pieces in response to receiving an input of a user for the pattern pieces, generate a sewing tag for the pattern blocks based on the input of the user, and perform automatic sewing between the pattern blocks based on the sewing tag and transmit a result of the automatic sewing to the simulation device.

Additional aspects of embodiments will be set forth in part in the description which follows and, in part, will be apparent from the description, or may be learned by practice of the disclosure.

### BRIEF DESCRIPTION OF THE DRAWINGS

These and/or other aspects, features, and advantages of the invention will become apparent and more readily appreciated from the following description of embodiments, taken in conjunction with the accompanying drawings of which:
FIG. 1 is a flowchart illustrating automatic sewing simulation according to an embodiment.
FIG. 2 is a flowchart illustrating an operating method of a simulation device, according to an embodiment.
FIGS. 3A to 3I are diagrams schematically illustrating a process of generating a pattern block, according to an embodiment.
FIG. 4 is a flowchart illustrating an operating method of a simulation device, according to an embodiment.
FIGS. 5A to 5D are diagrams schematically illustrating pattern block editing according to an embodiment.
FIG. 6 is a diagram schematically illustrating a pattern block, according to an embodiment.
FIG. 7 is a diagram schematically illustrating a pattern block, according to an embodiment.
FIG. 8 is a diagram schematically illustrating a pattern block, according to an embodiment.
FIG. 9 is a block diagram of an electronic device, according to an embodiment.

### DETAILED DESCRIPTION

The following structural or functional description of examples is provided as an example only and various alterations and modifications may be made to the examples. Thus, an actual form of implementation is not construed as limited to the examples described herein and should be understood to include all changes, equivalents, and replacements within the idea and the technical scope of the disclosure.

Although terms such as first, second, and the like are used to describe various components, the components are not limited to the terms. These terms should be used only to distinguish one component from another component. For example, a "first" component may be referred to as a "second" component, and similarly, the "second" component may also be referred to as the "first" component.

It should be noted that when one component is described as being "connected," "coupled," or "joined" to another component, the first component may be directly connected, coupled, or joined to the second component, or a third component may be "connected," "coupled," or "joined" between the first and second components.

The singular forms "a," "an," and "the" are intended to include the plural forms as well, unless the context clearly indicates otherwise. It will be further understood that the terms "comprises/comprising" and/or "includes/including," when used herein, specify the presence of stated features, integers, steps, operations, elements, and/or components, but do not preclude the presence or addition of one or more other features, integers, steps, operations, elements, components and/or groups thereof.

As used herein, each of "A or B," "at least one of A and B," "at least one of A or B," "A, B, or C," "at least one of A, B, and C," "at least one of A, B, or C," "one or a combination or two or more of A, B, and C," and the like may include any one of the items listed together in the corresponding one of the phrases, or all possible combinations thereof.

Hereinafter, the examples are described in detail with reference to the accompanying drawings. When describing the examples with reference to the accompanying drawings, like reference numerals refer to like components and a repeated description related thereto is omitted.

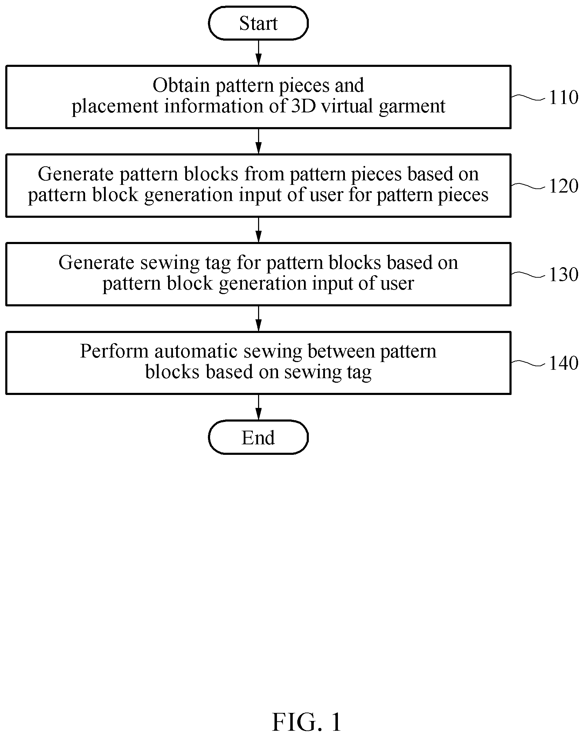

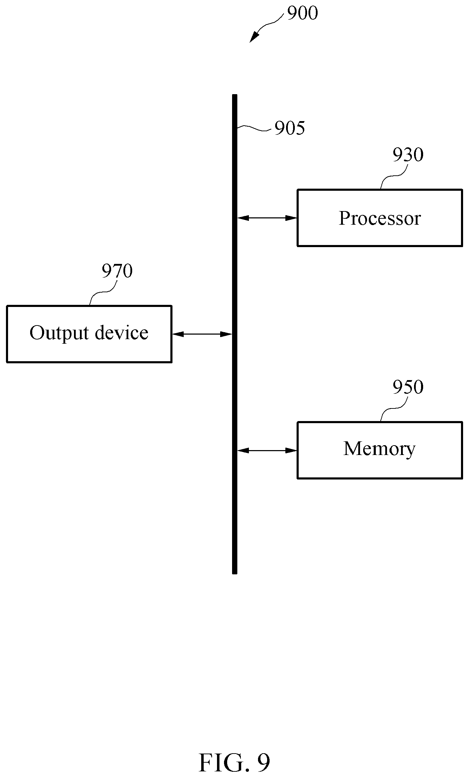

FIG. 1 is a flowchart illustrating automatic sewing simulation, according to an embodiment. For ease of description, operations 110 to 140 are described as being performed using an electronic device 900 shown in FIG. 9. However, operations 110 to 140 may also be performed by another suitable electronic device in a suitable system.

Furthermore, the operations of FIG. 1 may be performed in the shown order and manner. However, the order of some operations may change, or some operations may be omitted without departing from the spirit and scope of the shown example. The operations shown in FIG. 1 may be performed in parallel or simultaneously. Hereinafter, the electronic device 900 may also be referred to as a "simulation device" herein.

In operation 110, the simulation device may obtain pattern pieces and placement information of a three-dimensional (3D) virtual garment. For example, assuming that the 3D virtual garment is a general top, the top may have a collar pattern, a cuff pattern, a front body pattern, a back body pattern, an arm sleeve pattern, and the like. The pattern pieces of the 3D virtual garment may correspond to individual patterns that compose the virtual garment. The simulation device may obtain information on the pattern pieces of the 3D virtual garment. Here, the placement information may include information on a placement plate and a placement point that are predefined on an object on which the 3D virtual garment may be worn. In addition, the placement information may further include sewing relationship information between individual patterns that compose the 3D virtual garment after the placement plate is placed on the placement point on the object on which the 3D virtual garment may be worn. Accordingly, the simulation device may confirm information on a pattern block type based on the placement information of the 3D virtual garment.

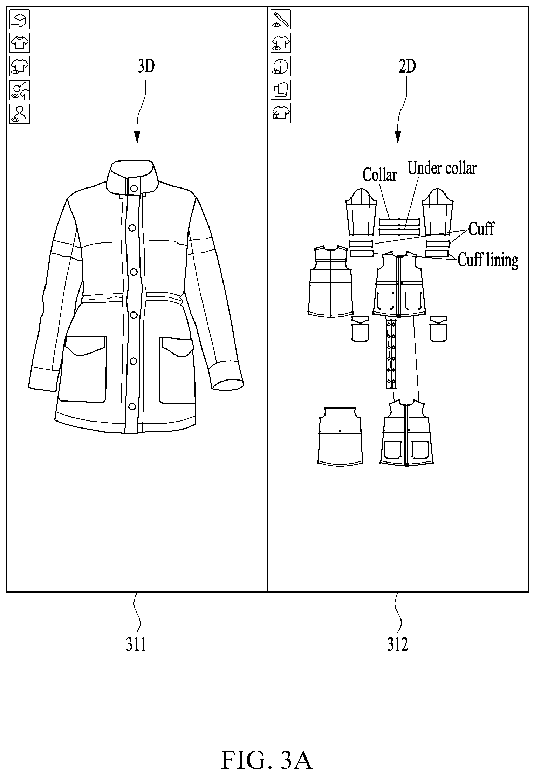

The simulation device may display two-dimensional (2D) pattern pieces corresponding to a result of simulation performed in a state in which the 3D virtual garment is worn on the object (e.g., an avatar). The result of simulation performed in a state in which the 3D virtual garment is worn on the object may correspond to a result of simulation performed in 3D on the pattern pieces of the 3D virtual garment by reflecting the placement information. The object may include a 3D object. Specifically, the object may be an object on which the 3D virtual garment may be worn and may correspond to a 3D avatar. For example, in response to a pattern piece display input of a user for a simulated general top, the simulation device may display a collar pattern, a cuff pattern, a front body pattern, a back body pattern, an arm sleeve pattern, and the like on a user interface through a 2D interface. For example, referring to FIG. 3A, the simulation device may display a simulation result of the 3D virtual garment generated by the user as 3D simulation 311 and 2D simulation 312.

The simulation device may generate a pattern block type based on a pattern block type generation input of the user. For example, the simulation device may receive the pattern block type generation input, which may perform setting for at least one of a group, a category, a style, or a pattern block type. The pattern block type may be generated in various ways according to the setting of the user. The pattern block type may either be generated by importing a pattern block type generated by another user, or be generated according to an intention of the user.

The pattern block type may be a setting used to specify a pattern block type to a pattern piece to generate a pattern block. For example, when the user intends to generate a pattern block for a front pattern piece of a top, the user may either generate a front pattern block type by loading a preset pattern block type that is in a database, or generate a new front pattern block type.

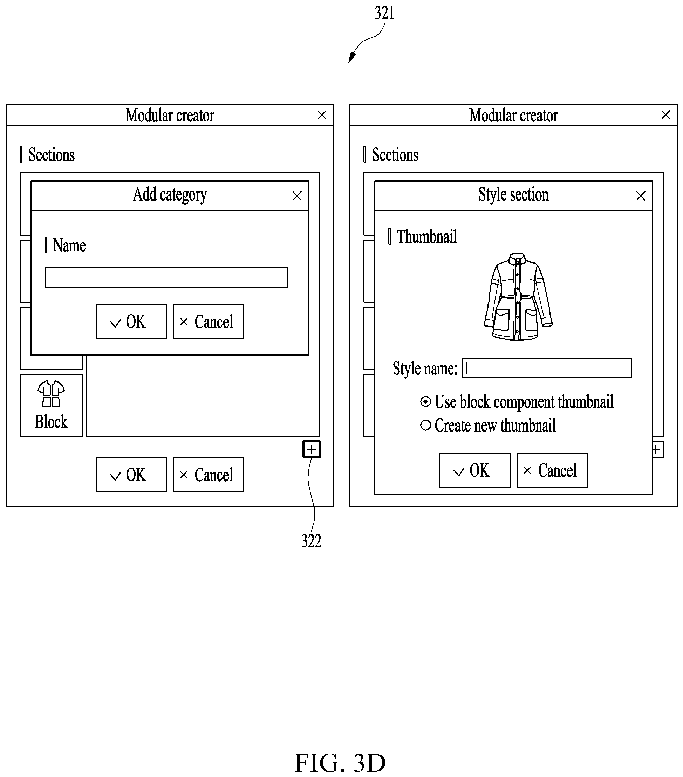

Referring to FIG. 3D, the user may generate a group, a category, a style, and a pattern block type through a modular creator 321. A pattern block type generated through the modular creator 321 may be specified for pattern pieces included in a 3D virtual garment simulation result according to a specified input of the user for each of pattern pieces so that pattern blocks may be generated from the pattern pieces. In operation 120, the simulation device may generate pattern blocks from the pattern pieces based on a pattern block generation input of the user for the pattern pieces. The pattern block generation input of the user may include a specified input of the user specifying a pattern block type for each of the pattern pieces. For example, when the user specifies a back pattern block type for a back pattern of a top, the simulation device may generate a back pattern block for the back pattern. Likewise, when specifying pattern block types, which the user previously generated for each of the pattern pieces existing on the top, for corresponding pattern pieces, the simulation device may generate a pattern block for each of the pattern pieces.

The simulation device may update a pattern block list in response to a pattern editing input of the user that adds a new pattern piece or replaces at least one of the pattern pieces with another pattern piece.

Referring to FIG. 31, the simulation device may generate pattern blocks in response to a pattern editing input (e.g., a pattern add button 329) of the user that adds a new pattern piece or replaces a pattern piece. For example, the simulation device may add a new pattern piece to a front body pattern block of the top in response to the pattern editing input of the user. The user may update the pattern block list by adding a pattern piece that suits their intention or modifying an existing pattern piece. Accordingly, the simulation device may store a front body pattern block list as pattern blocks having two styles.

A pattern block may be defined as a tool to simplify sewing between pattern pieces. The pattern block may include pattern block type information and information on a sewing tag. The pattern block type information may be a type of pattern block and may allow a user to perceive which part of a garment a current pattern piece is.

In operation 130, the simulation device may generate a sewing tag for pattern blocks based on the pattern block generation input of the user. The simulation device may assign a sewing tag to each of the pattern blocks based on a predefined tagging method. The simulation device may confirm sewing relationship information of the pattern blocks based on sewing relationship information of the pattern pieces and information on the pattern blocks to which the pattern pieces belong. The simulation device may assign a sewing tag to an edge area of the pattern blocks based on the sewing relationship information of the pattern blocks.

Information on a pattern block may be stored as a block template. The block template may be a set of data in which a sewing rule is defined. The block template may be generated according to pattern pieces of a garment. Predefined sewing rules may be present in the block templates. For example, four pairs of stitches (e.g., two on the shoulders and two on the sides) may generally be present in a front body and a back body. In addition, two pairs of stitches (e.g., one on the right and one on the left, between armholes and sleeves) may be present in the front body and the sleeves. On the other hand, there may generally be no stitching between the sleeves and a front of pants.

The sewing relationship between the pattern blocks may include information for identifying pattern blocks, on which sewing between pattern blocks is to be performed, as a pair and information for setting an edge area of the pattern blocks identified as being paired as an associated sewing tag.

When the simulation device checks for sewing lines between the front body and the sleeves and a total of three pairs of sewing lines are confirmed, it may be determined as abnormal sewing. Accordingly, the simulation device may provide, on a user interface, a user interface element requesting the user to reset or receive an approval to proceed. On the other hand, when the simulation device checks for sewing lines between the front body and the sleeves and a total of two pairs of sewing lines are confirmed, it may be determined as normal sewing, and a sleeve on the left may be determined as a left sleeve and a sleeve on the right may be determined as a right sleeve. The simulation device may provide a user interface to check whether a tag determined for a sleeve is tagged as the user intended.

Accordingly, a sewing tag may be assigned to sewing lines that are present between arbitrary block templates, according to the predefined sewing rules. For example, in the case of a collar pattern, a virtual block template for the collar pattern may define a sewing rule for a front body and a generally sewn sewing line and may include sewing tag information for the sewing line. Likewise, a block template for the front body may define a sewing rule for the collar pattern and a generally sewn sewing line and may include sewing tag information for the sewing line.

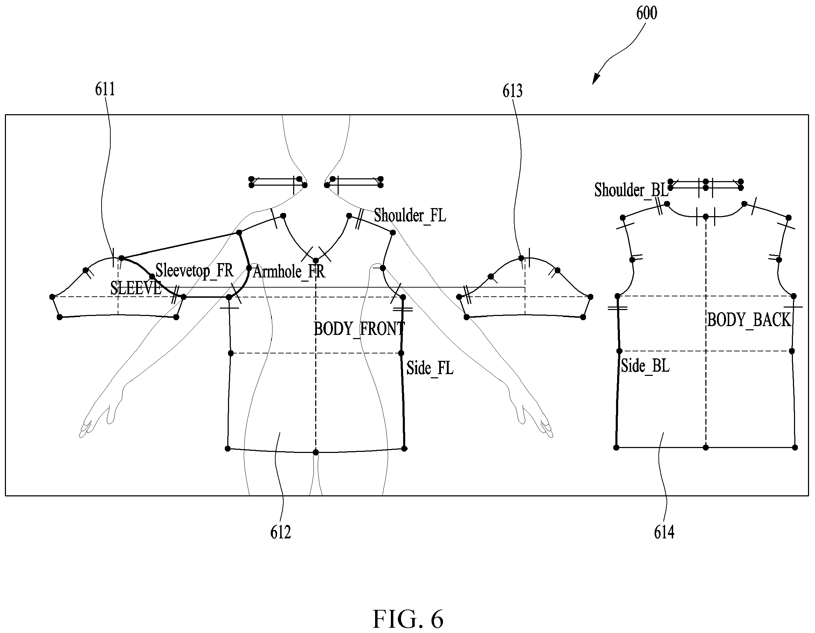

The above-mentioned block template may be generated for pattern blocks that are generated for each of the pattern pieces of the 3D virtual garment and may function to allow sewing to be performed automatically without manually renewing sewing even when the user adds or replaces a pattern block or a pattern piece in the future. The block template and the pattern block may be described in detail with reference to FIG. 6 below.

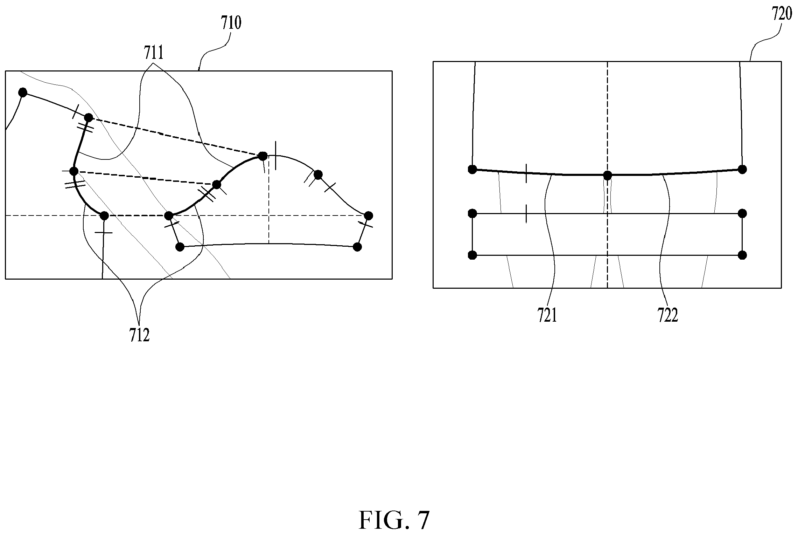

The predefined tagging method may include a processing rule for adjusting a number of sewing lines on which sewing between the pattern blocks is to be performed. A sewing line generated by the user may not correspond one-to-one with a sewing tag embedded in the block template. The simulation device may adjust the number of sewing lines using the processing rule to match the sewing line with the sewing tag. The processing rule may be described in detail with reference to FIG. 7 below.

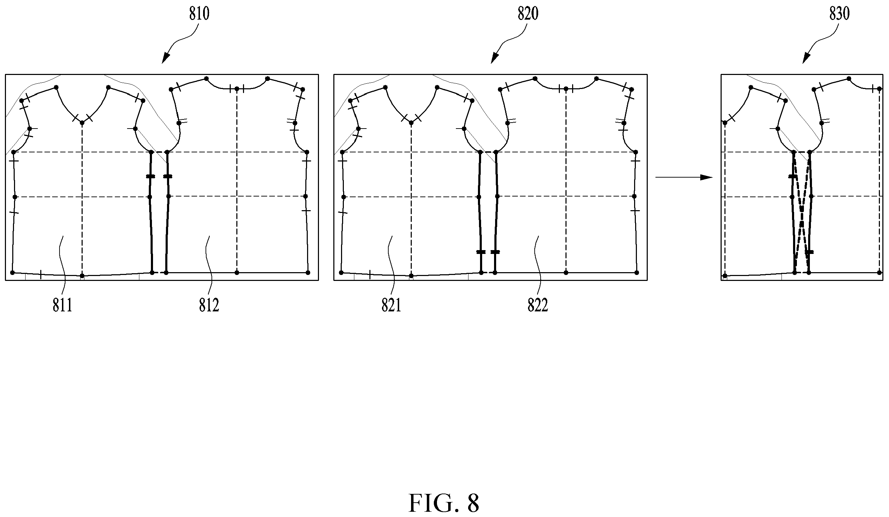

The predefined tagging method may include a direction rule for adjusting the direction in which sewing between the pattern blocks is to be performed. Sewing tags assigned according to the block template may be performed based on pattern block pairs but may each be stored as separate block templates and pattern blocks. For example, four pairs of sewing tags may be assigned between the front body and the back body, but the front body pattern block and the back body pattern block may be stored separately. Therefore, a sewing line according to each sewing tag may be redefined to have a certain direction. The direction rule may be described in detail with reference to FIG. 8 below.

The sewing tag may be given to a pair of pattern blocks between which sewing may be performed. The sewing tag may be defined as a variable in which tag information for performing automatic sewing when adding or replacing a block and to maintain a sewing status is stored. The sewing tag may be assigned to a pattern block in the user interface. The sewing tag may include data such as a location, an orientation, and a specific role of the pattern block in the overall garment. A sewing tag list may include information needed to automatically sort and sew patterns of a garment.

In operation 140, the simulation device may perform automatic sewing between the pattern blocks based on the sewing tag. The simulation device may perform automatic sewing between target pattern blocks, among pattern blocks, on which sewing is performed, in response to a pattern block editing input of the user that adds a new pattern block or replaces a portion of the pattern blocks.

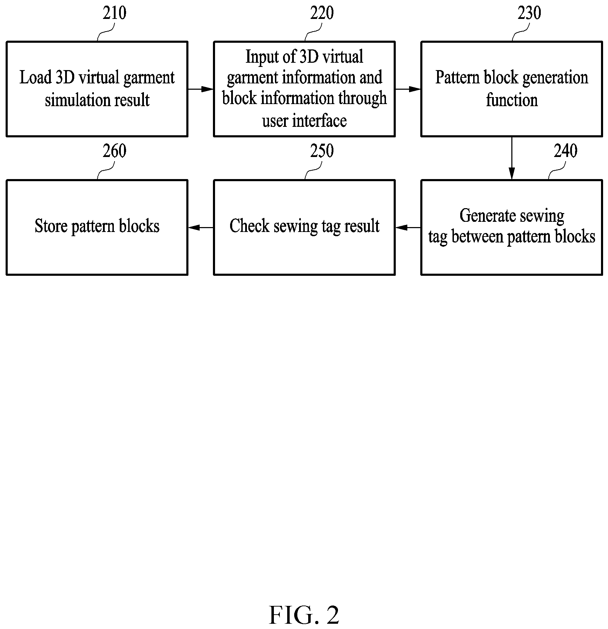

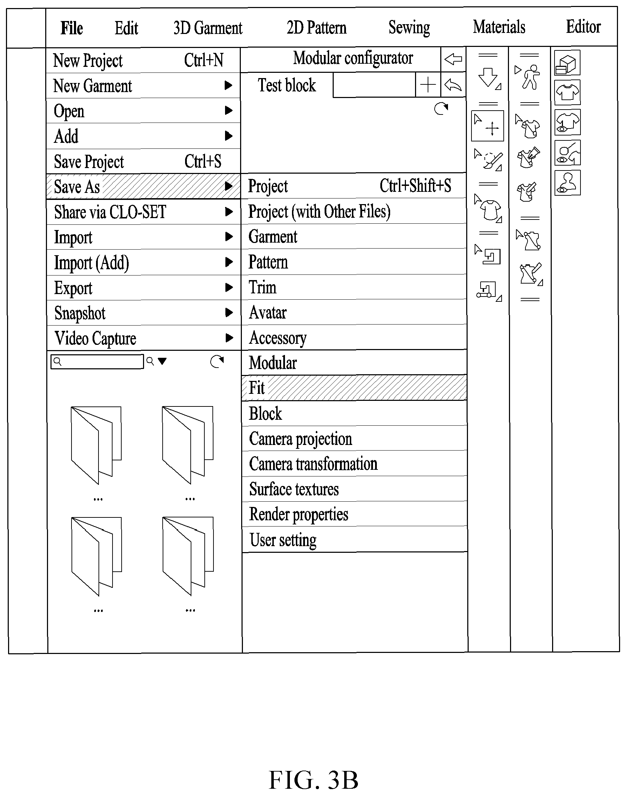

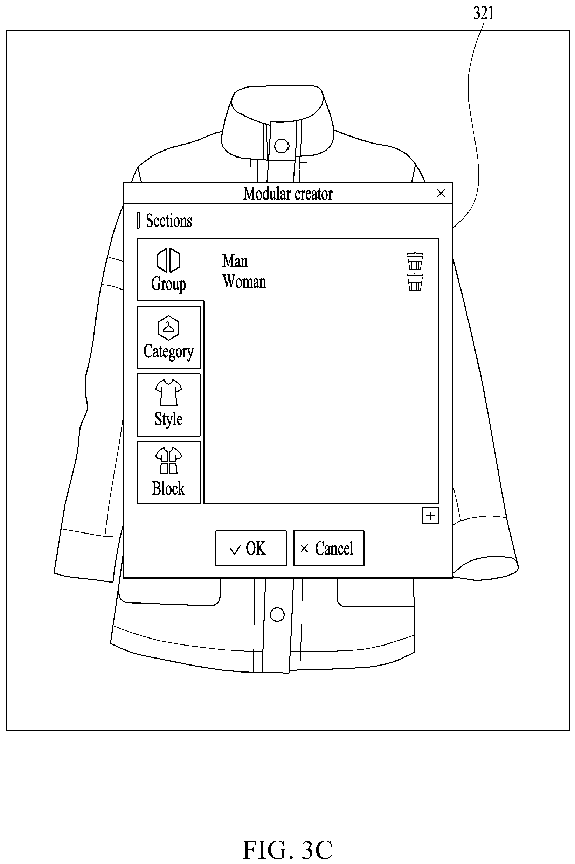

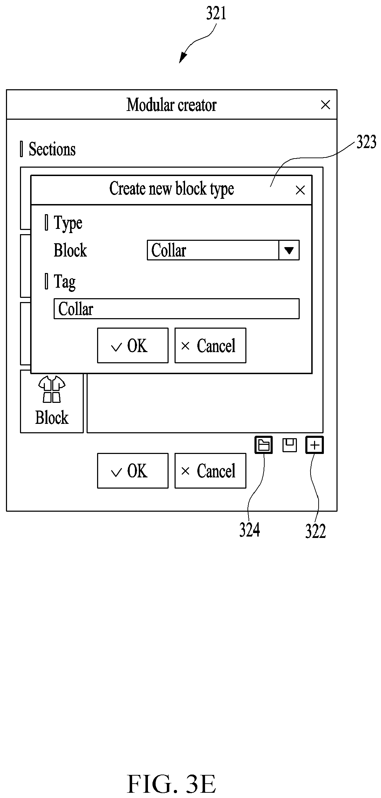

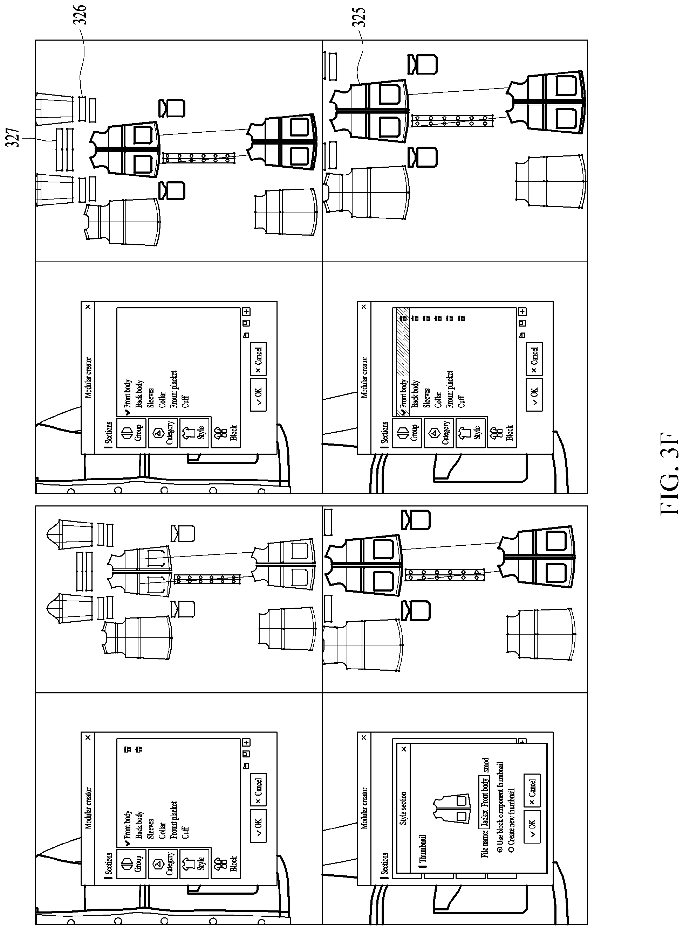

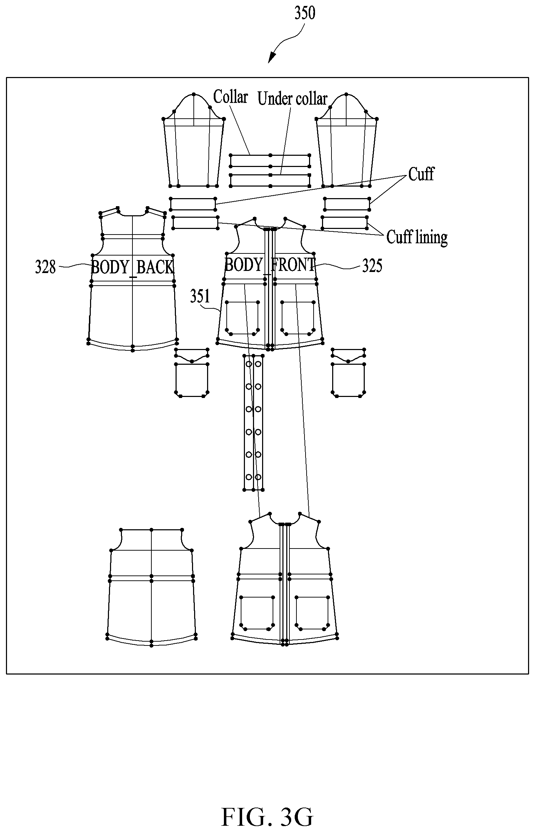

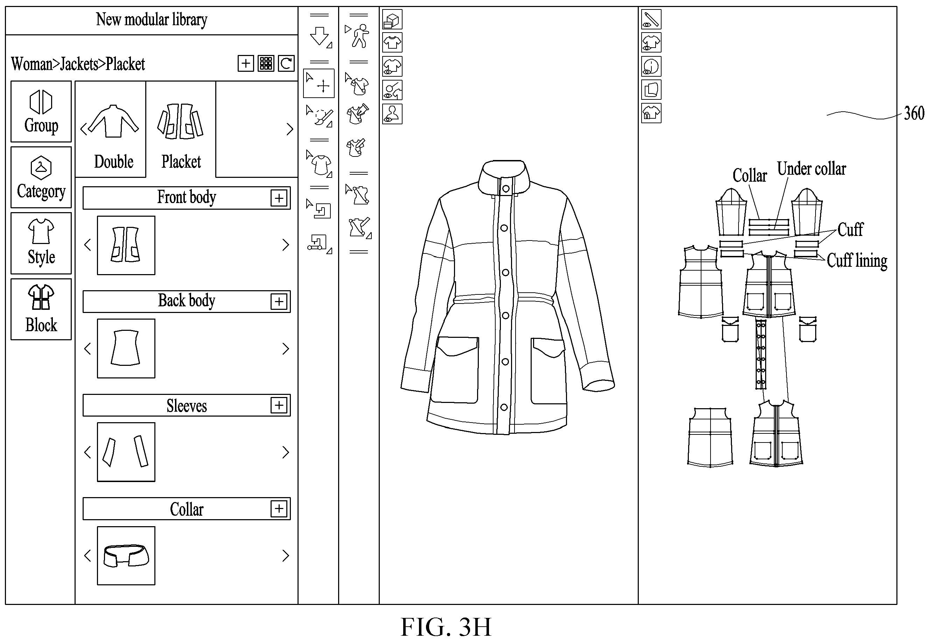

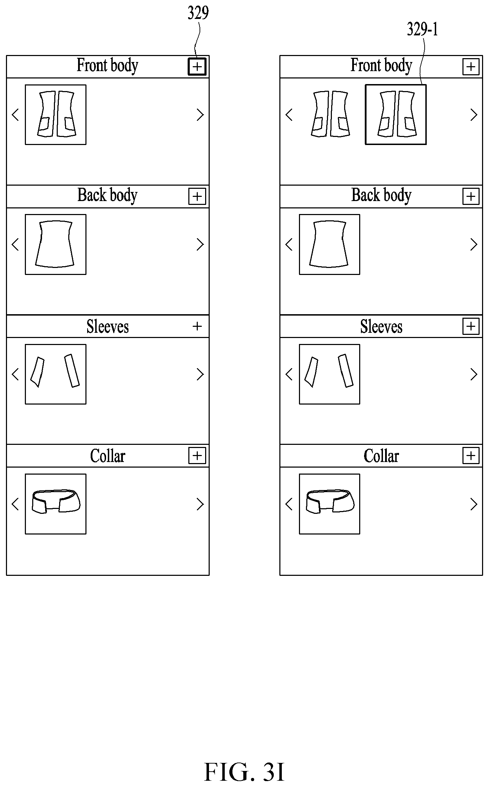

FIG. 2 is a flowchart illustrating an operating method of a simulation device, according to an embodiment; and FIGS. 3Ato 3I are diagrams schematically illustrating a process of generating a pattern block, according to an embodiment. The description provided with reference to FIG. 1 may apply to FIGS. 2 to 3I and accordingly, a repeated description related thereto is omitted.

Referring to FIG. 2, the simulation device may perform operations 210 to 260 to generate a pattern block when pattern block information is not present in a 3D virtual garment simulation result. The operations 210 to 260 of FIG. 2 may be described with reference to FIGS. 3A to 31, which also illustrate user interfaces.

In operation 210, the simulation device may load the 3D virtual garment simulation result in which the user has completed editing the 3D virtual garment. Referring to FIG. 3A, the simulation device may display, on the user interface, a 3D simulation 311 corresponding to a state in which the 3D virtual garment is worn on an avatar and a 2D simulation 312 in which pattern pieces of the 3D virtual garment are displayed.

Referring to FIG. 3B, the simulation device may receive a save input (e.g., Save as Fit) of the user through the user interface and perform a save operation to convert the 3D virtual garment simulation result into a pattern block.

In operation 220, the simulation device may receive input of 3D virtual garment information and block information from the user through the user interface. Referring to FIG. 3C, the simulation device may receive a pattern block type generation input for a group, a category, and a style to store the 3D virtual garment simulation through an interface of the modular creator 321. Referring to FIG. 3D, when there is no group, category, and style to save, the user may click a "+" button 322 in the modular creator 321 to directly add a group, a category, and a style. Referring to FIG. 3E, the simulation device may receive the specified input of the user specifying a pattern block type for the pattern pieces. For example, the user may create a pattern block type through a pattern block type generation 323 (e.g., Create new block type) interface of the modular creator 321. As in the case described above, when there is no pattern block type to save, the user may press the "+" button 322 to add a new pattern block type or press a preset button 324 to load a previously saved pattern block type.

In operation 230, the simulation device may receive the specified input of the user and a selection input of the user for a pattern piece and generate a pattern block for the selected pattern piece through a pattern block generation function. Referring to FIG. 3F, the user may specify the pattern block type generated using the modular creator 321 for a pattern piece. The simulation device may receive the pattern block type generation input of the user for the pattern block type generated using the modular creator 321. In response to receiving the selection input for the pattern piece selected by the user and pattern block type designation, the simulation device may generate a pattern block for the pattern piece.

For example, the user may generate a pattern block for a front body 325 by clicking on the front body 325 pattern piece of the 3D virtual garment and selecting a front body pattern block type. Here, the generated front body pattern block may be generated as a pattern block that may be automatically sewn with cuff 326 pattern pieces and collar 327 pattern pieces through the pattern block generation function. The user may generate the cuff 326 pattern block and the collar 327 pattern block by specifying each pattern block type for the cuff 326 pattern piece and the collar 327 pattern piece. That is, the user may specify an appropriate pattern block type for each of the pattern pieces of the 3D virtual garment and convert the pattern pieces of the 3D virtual garment to generate pattern blocks.

In operation 240, the simulation device may generate a sewing tag between the pattern blocks.

In operation 250, the simulation device may display sewing tags so that the user may check a sewing tag result. Referring to FIG. 3G, the simulation device may display pattern blocks 350 generated by the user. The simulation device may display a sewing relationship between pattern blocks. For example, the user may confirm that a sewing relationship 351 between a left side of the front body 325 pattern block and a right side of a back body 328 pattern block is displayed. Generally, when designing a top, sewing is performed between the left side of the front body 325 and the right side of the back body 328, so the simulation device may display the sewing relationship 351 according to which sewing is performed between the left side of the generated front body 325 pattern block and the right side of the generated back body 328 pattern block. As in the above-described examples, the simulation device may apply the sewing relationship 351 and rules generally applied in designing a virtual garment between the pattern blocks. That is, sewing tags may be given to a pair of pattern blocks between which sewing may be performed and may include general sewing rule sets.

In operation 260, the simulation device may store pattern blocks 360 generated in the 3D virtual garment. Referring to FIG. 3H, the simulation device may display the pattern blocks 360 generated on the user interface and save the pattern blocks 360 as one completed 3D virtual garment pattern block.

Referring to FIG. 3I, the simulation device may add a pattern piece to the pattern block in response to the pattern editing input of the user to the pattern add button 329. The user may add a new pattern piece to completed pattern blocks in a variety of ways. For example, the user may add a new pattern piece 329-1 using the pattern add button 329 of the pattern block. In addition, the user may select an arbitrary pattern block from the pattern blocks, and specify a pattern to be saved and a name of the pattern block. The simulation device may, in response to the pattern editing input, update the pattern block list by adding a new pattern piece to a stored pattern block or replacing a pattern piece existing in the stored pattern block with a new pattern block.

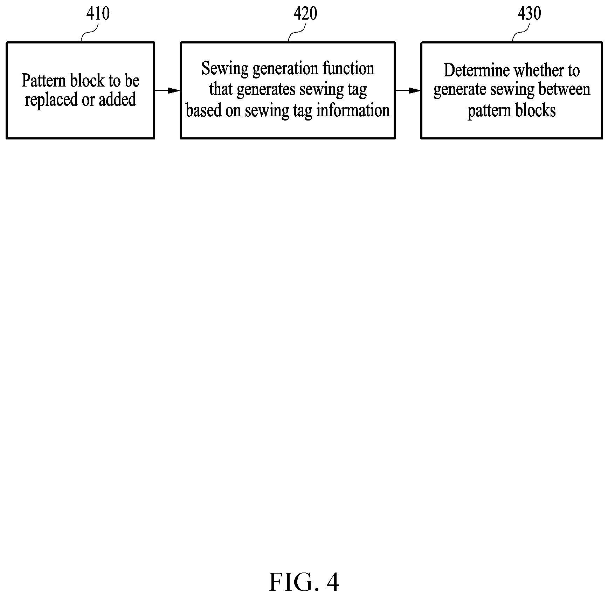

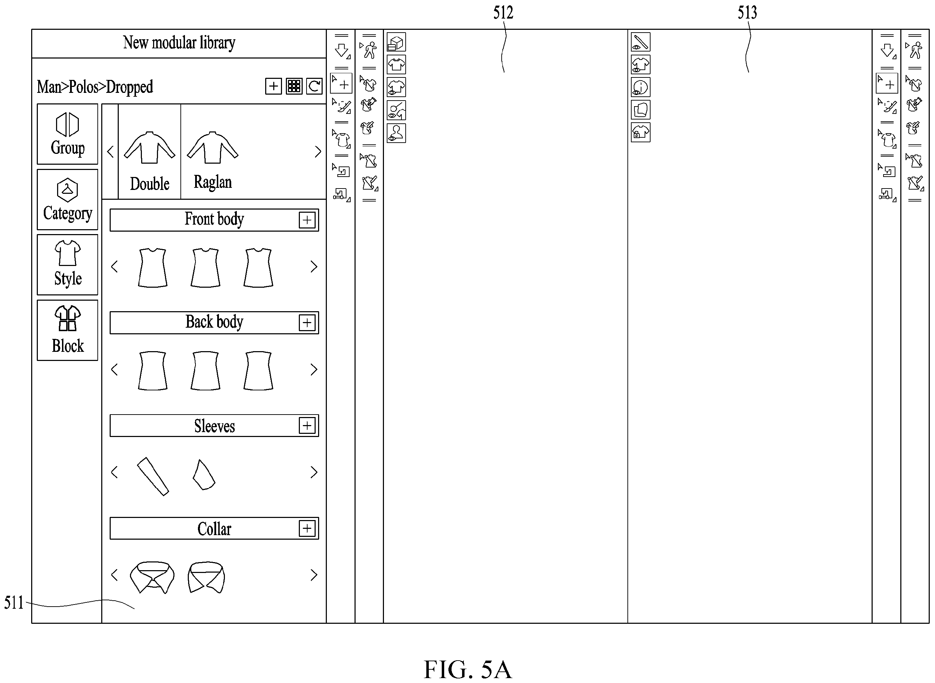

FIG. 4 is a flowchart illustrating an operating method of a simulation device, according to an embodiment. FIGS. 5A to 5D are diagrams schematically illustrating pattern block editing according to an embodiment. The description provided with reference to FIG. 1 may apply to FIGS. 4 to 5D and accordingly, a repeated description related thereto is omitted.

The simulation device may perform automatic sewing between target pattern blocks, among pattern blocks, on which sewing is performed, in response to a pattern block editing input of the user that adds a new pattern block or replaces a portion of the pattern blocks. The above-described pattern editing input may be an input for generating a pattern block by specifying an existing pattern block type or a pattern block type newly generated by the user for a new pattern piece or a replaced pattern piece. The pattern block editing input may be an input for loading an existing pattern block or for loading a pattern block with which a sewing tag is compatible. For example, a front body, a front body with collar, and a front body (raglan), while being of different block types, are all tops and accordingly sewing tags may be compatible between them. Thus, pattern blocks may be replaced according to the pattern block editing input of the user. The simulation device may update a pattern block list according to the pattern block editing input of the user. That is, the pattern block list may correspond to a list of compatible patterns that may be included in the pattern block.

In operation 410, the simulation device may receive, from the user, a pattern block editing input for a pattern block to be replaced or added. Here, the simulation device may receive sewing tag information and parameter information for the pattern block to be replaced or added.

In operation 420, the simulation device may indicate the received sewing tag information and parameter information using a sewing generation function that generates a sewing tag based on sewing tag information. Thereafter, the simulation device may generate a sewing tag for the pattern block to be replaced or added. However, since sewing is possible only when at least two pattern blocks are present, the simulation device may perform an operation of determining whether sewing is possible.

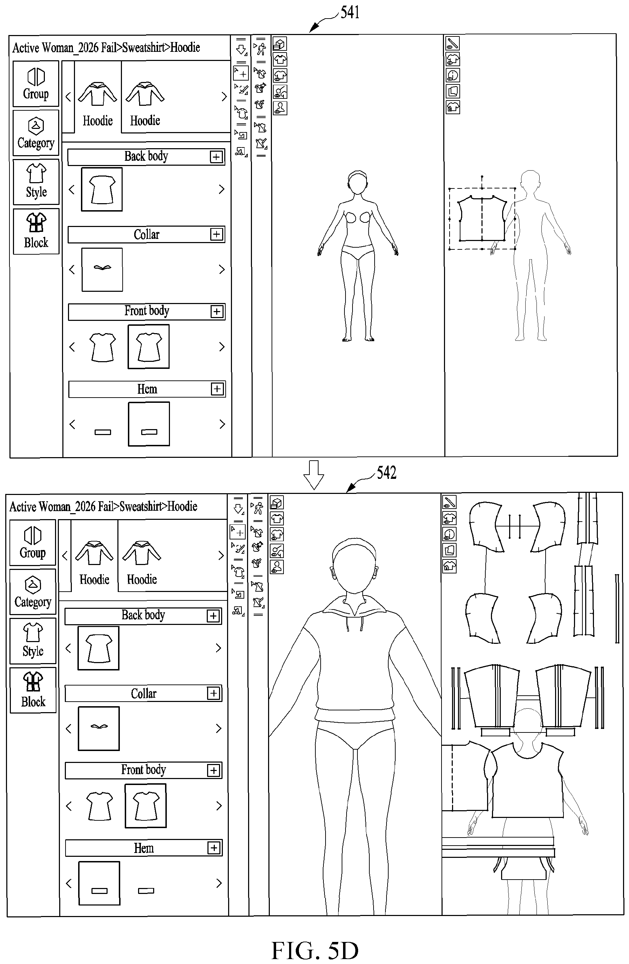

In operation 430, the simulation device may determine whether to generate sewing between pattern blocks according to a result received from the sewing tag generation function. A process of determining whether to generate sewing between the pattern blocks may be described with reference to FIGS. 5A and 5D. The simulation device may confirm cases in which no pattern block is present, cases in which only a portion of the pattern blocks is present, and cases in which all of the pattern blocks are present. When all or a portion of the pattern blocks are present, the simulation device may determine whether to perform sewing between the pattern blocks based on the sewing tag. When no pattern block is present or only a portion of the pattern blocks is present, the simulation device may determine whether to perform simulation of a 3D virtual garment. The simulation device may display a simulation result or a sewing tag of the pattern blocks on the user interface according to the result of the determination.

Referring to FIG. 5A, when the user has replaced or added a pattern block but no other pattern block is present or there is no pattern block on which sewing is to be performed, the simulation device may not perform sewing. When a pattern block has been replaced or added in a pattern block interface 511 but there is no target pattern block on which sewing is to be performed, the simulation device may not simulate a 3D virtual garment on a 3D simulation area 512 and a 2D simulation area 513. However, since the sewing tag has been generated in the replaced or added pattern block, the simulation device may save the sewing tag together with the replaced or added pattern block.

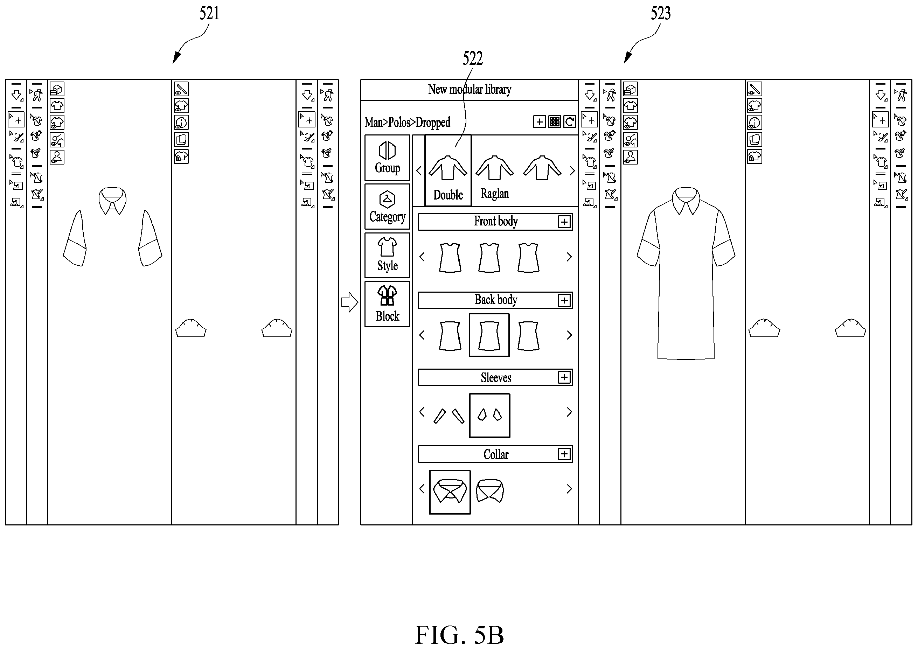

Referring to FIG. 5B, when the user has replaced or added a pattern block but only a portion of the pattern blocks exists, the simulation device may perform possible sewing for the existing portion of the pattern blocks based on the sewing tag. That is, the user may add a top pattern block 522 in step 521 in which only a portion of the pattern blocks is present. The simulation device may receive sewing tag information and parameter information of the top pattern block 522 generated by the user and generate a sewing tag. Based on the generated sewing tag, the simulation device may perform sewing that connects a half-sleeve pattern block, which is an existing partial pattern block, to the added top pattern block 522. The simulation device may simulate a result of the performed sewing and may display, to the user interface, an operation 523 in which the sewing has been performed.

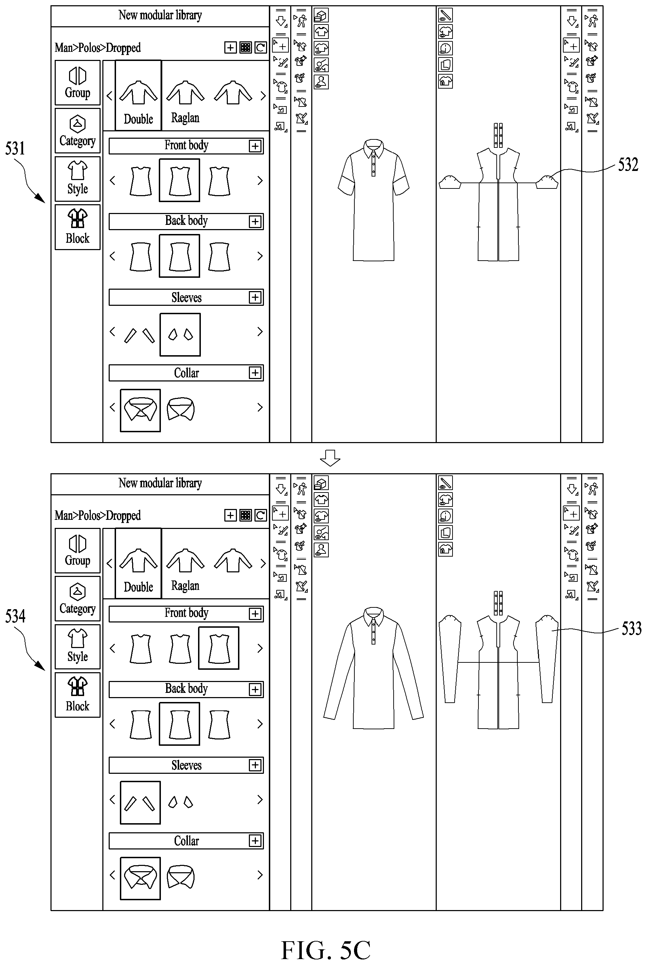

Referring to FIG. 5C, when a pattern block exists in both the 3D simulation area 512 and the 2D simulation area 513 of the user interface and when the pattern block is to be replaced, the simulation device may perform automatic sewing between the replaced pattern blocks and the existing pattern blocks. For example, in step 531 in which all of the pattern blocks are present, the user may provide an input indicating changing of a short sleeve pattern block 532 to a long sleeve pattern block 533. The simulation device may receive the pattern block editing input of the user and receive sewing tag information and parameter information of a long sleeve pattern block 533 in order to replace the short sleeve pattern block 532 with the long sleeve pattern block 533. The simulation device may generate a sewing tag for the long sleeve pattern block 533 based on the received sewing tag information and parameter information. Based on the generated sewing tag, the simulation device may perform automatic sewing 534 of the body pattern block and the collar pattern block, which is already present, and the long sleeve pattern block 533.

Referring to FIG. 5D, the simulation device may simulate a 3D virtual garment in a state in which the 3D virtual garment is worn on an avatar by continuously receiving an input of the user for the pattern blocks. That is, in a state 541 in which the garment is not worn on an avatar, the user may select multiple pattern blocks so that sewing may be performed between the pattern blocks and the sewn pattern blocks may be worn on the avatar. When a selection input of the user for the pattern blocks is continuously received, the simulation device may simulate a state 542 in which a top garment is worn on the avatar.

FIG. 6 is a diagram schematically illustrating a pattern block according to an embodiment. The description provided with reference to FIGS. 1 to 5D may apply to FIG. 6 and accordingly, a repeated description related thereto is omitted.

Referring to FIG. 6, the simulation device may check pattern blocks 600 for which a pattern block type has been set for pattern pieces according to an input of the user. For example, for a sleeve pattern block 611 or a sleeve pattern block 613, a front body pattern block 612, and a back body pattern block 614, it may be confirmed that a virtual block template has been generated at an edge of each of the pattern blocks 600. The virtual block template may not be displayed on the user interface, or may be displayed on the user interface according to settings as required by the user. In the sleeve pattern block 611 and the front body pattern block 612, the simulation device may set a sewing rule in an edge area of the virtual block template. Here, the sewing rule may be set so that Sleevetop_FR, a sewing tag of the sleeve pattern block 611, and Armhole_FR, a sewing tag of the front body pattern block 612, may be sewn.

The preset method may be a method of assigning a sewing tag (e.g., Sleevetop_FR, Armhole_FR, Shoulder _FR, Side_FL, Side_BL, and Shoulder_BL of FIG. 6) to an area in which sewing between the pattern blocks 600 is performed, based on a sewing line of a pattern block. Since a front body and a half of a sleeve are sewn in a typical short-sleeved T-shirt, a sewing tag may be assigned to an area in which sewing may be performed.

FIG. 7 is a diagram schematically illustrating a pattern block according to an embodiment. The description provided with reference to FIGS. 1 to 6 may apply to FIG. 7 and accordingly, a repeated description related thereto is omitted.

Referring to FIG. 7, a state 710 in which a front body pattern block and a sleeve pattern block are being sewn is shown. In general, the front body pattern block and the sleeve pattern block may be sewn with one sewing line. However, a user may arbitrarily split the sewing line into two and set a first sewing line 711 and a second sewing line 712, thereby generating a notch between the first sewing line 711 and the second sewing line 712. In this case, the first sewing line 711 and the second sewing line 712 may not be sewing lines that are present in a general front body pattern block and accordingly may not match an existing sewing tag one-to-one. In this case, a simulation device may need to consider connectivity between the first sewing line 711 and the second sewing line 712, and assign a sewing tag in a connected state.

In another example, there may be a state 720 in which a front body pattern is closed. In a case of a front body pattern, open garment such as a jacket may be present. Therefore, a bottom line sewing tag of the front body pattern may be divided into L/R (e.g., an L sewing tag 721 and an R sewing tag 722). However, when a user designed a top sewed with a bottom line sewing line as one, the simulation device may divide the sewing line into two according to the L sewing tag 721 and the R sewing tag 722 and assign sewing tags to each of the sewing lines.

FIG. 8 is a diagram schematically illustrating a pattern block according to an embodiment. The description provided with reference to FIGS. 1 to 7 may apply to FIG. 8 and accordingly, a repeated description related thereto is omitted.

Referring to FIG. 8, the result of a problem that may occur when a direction is not defined when sewing a first front body pattern block 811 or a second front body pattern block 821 and a first back body pattern block 812 or a second back body pattern block 822 is shown as an example.

A downward sewing 810 may be a result saved after the user performs a sewing simulation on the first front body pattern block 811 and the first back body pattern block 812 from the top to the bottom.

An upward sewing 820 may be a result saved after the user performs a sewing simulation on the second front body pattern block 821 and the second back body pattern block 822 from the bottom to the top. From the user's perspective, simulation results of the downward sewing 810 and the upward sewing 820 may appear to be the same. When the user replaces the first back body pattern block 812 with the second back body pattern block 822 in the downward sewing 810, a twisted direction sewing 830 result may be obtained.

Since the twisted direction sewing 830 may not be considered a normal sewing simulation result, the simulation device may attempt to prevent such a case. Therefore, in a case of sewing that produces a same sewing simulation result, the simulation device may save the sewing after changing the setting into using only the downward sewing 810 rule or using only the upward sewing 820 rule. That is, when only the downward sewing 810 rule is used, even when the user saves a result of sewing according to the upward sewing 820 as a pattern block, the simulation device may set a direction rule so that the pattern block may be saved after being changed into the downward sewing 810.

For ease of description, the above embodiment describes that operations are performed by the simulation device, but in the description with reference to FIGS. 1 to 9 above, the simulation device may be a user terminal, the above operations may be performed by a server, and the user terminal may receive a simulation result from the server and display the result to the user on a display.

The server may receive pattern pieces generated based on a simulation result of a 3D virtual garment from the simulation device, generate pattern blocks in response to receiving an input of a user for the pattern pieces, generate a sewing tag for the pattern blocks based on the input of the user, and perform automatic sewing of the pattern blocks based on the sewing tag and transmit a result of the automatic sewing to the simulation device.

The user terminal may be a device that may install and run a server-related application and may provide an interface to the user. The interface may be provided by the user terminal itself. For example, the interface may be provided by an operating system (OS) of the user terminal or may be provided by an application installed on the user terminal. In addition, the interface may be provided by the server, and the user terminal may simply receive and display the interface provided by the server.

The user may access the server through a terminal on which an application is installed. The server may serve as a service platform that provides a 3D virtual garment simulation service. The user may subscribe to the 3D virtual garment simulation service provided by the server through the application to create an account for the 3D virtual garment simulation service. The server may be connected to the user terminal through a network. Here, the network may include the Internet, at least one local area network (LAN), a wide area network (WAN), a cellular network, a mobile network, other types of networks, or a combination thereof.

FIG. 9 is a block diagram of an electronic device according to an embodiment. Referring to FIG. 9, an electronic device 900 (e.g., a simulation device) may include a processor 930, a memory 950, and an output device 970 (e.g., a display). The processor 930, the memory 950, and the output device 970 may be connected to one another through a communication bus 905. In the process described above, for ease of description, the electronic device 900 may include the processor 930 for performing at least one method described above or an algorithm corresponding to at least one method described above.

The output device 970 may display a user interface that receives a user input related to an automatic sewing simulation provided by the processor 930, a setting input, a pattern editing input, a pattern block editing input of the user, and the like.

The memory 950 may store an algorithm related to an automatic sewing simulation method performed by the processor 930 and data obtained from a communication unit or a server providing an automatic sewing simulation service. Furthermore, the memory 950 may store a variety of information generated in the processing process of the processor 930 described above. In addition, the memory 950 may store a variety of data and programs. The memory 950 may include, for example, a volatile memory or a non-volatile memory. The memory 950 may include a high-capacity storage medium such as a hard disk to store a variety of data.

In addition, the processor 930 may perform at least one of the methods described with reference to FIGS. 1 to 8 or an algorithm corresponding to at least one of the methods. The processor 930 is described as being included in the electronic device 900 but may be included in a server that performs a 3D virtual garment simulation.

The processor 930 may be a hardware-implemented data processing device having a circuit that is physically structured to execute desired operations. The desired operations may include, for example, instructions or code in a program. The processor 930 may be implemented as, for example, a central processing unit (CPU), a graphics processing unit (GPU), or a neural network processing unit (NPU). For example, a hardware-implemented electronic device 900 may include, for example, a microprocessor, a CPU, a processor core, a multi-core processor, a multiprocessor, an application-specific integrated circuit (ASIC), and a field programmable gate array (FPGA).

The processor 930 may execute a program and control the electronic device 900. Program code to be executed by the processor 930 may be stored in the memory 950.

The examples described herein may be implemented using hardware components, software components, and/or combinations thereof. A processing device may be implemented using one or more general-purpose or special-purpose computers, such as, for example, a processor, a controller, an arithmetic logic unit (ALU), a a digital signal processor (DSP), a microcomputer, an FPGA, a programmable logic unit (PLU), a microprocessor or any other device capable of responding to and executing instructions in a defined manner. The processing device may run an operating system (OS) and one or more software applications that run on the OS. The processing device may also access, store, manipulate, process, and create data in response to execution of the software. For purpose of simplicity, the description of a processing device is used as singular. However, one of ordinary skill in the art will appreciate that a processing device may include multiple processing elements and/or multiple types of processing elements. For example, a processing device may include a plurality of processors, or a single processor and a single controller. In addition, a different processing configuration is possible, such as one including parallel processors.

The software may include a computer program, a piece of code, an instruction, or some combination thereof, to independently or collectively instruct or configure the processing device to operate as desired. The software and/or data may be permanently or temporarily embodied in any type of machine, component, physical or virtual equipment, or computer storage medium or device for the purpose of being interpreted by the processing device or providing instructions or data to the processing device. The software may also be distributed over network-coupled computer systems so that the software is stored and executed in a distributed fashion. The software and data may be stored in a non-transitory computer-readable recording medium.

The methods according to the above-described examples may be recorded in non-transitory computer-readable media including program instructions to implement various operations of the above-described examples. The media may also include the program instructions, data files, data structures, and the like alone or in combination. The program instructions recorded on the media may be those specially designed and constructed for the examples, or they may be of the kind well-known and available to those having skill in the computer software arts. Examples of non-transitory computer-readable media include magnetic media such as hard disks, floppy disks, and magnetic tape; optical media such as compact disc read-only memory (CD-ROM) and a digital versatile disc (DVD); magneto-optical media such as floptical disks; and hardware devices that are specially configured to store and perform program instructions, such as read-only memory (ROM), RAM, flash memory, and the like. Examples of program instructions include both machine code, such as those produced by a compiler, and files containing higher-level code that may be executed by the computer using an interpreter.

The above-described hardware devices may be configured to act as one or more software modules in order to perform the operations of the above-described examples, or vice versa.

Although the examples have been described with reference to the limited number of drawings, it will be apparent to one of ordinary skill in the art that various technical modifications and variations may be made in the examples without departing from the spirit and scope of the claims and their equivalents. For example, suitable results may be achieved if the described techniques are performed in a different order, and/or if components in a described system, architecture, device, or circuit are combined in a different manner and/or replaced or supplemented by other components or their equivalents.

Therefore, other implementations, other examples, and equivalents to the claims are also within the scope of the following claims.

## Claims

1. An automatic sewing simulation method, the method comprising:
obtaining pattern pieces and placement information of a three-dimensional (3D) virtual garment;
generating pattern blocks from the pattern pieces based on a pattern block generation input of a user for the pattern pieces;
generating a sewing tag for the pattern blocks in response to the pattern block generation input of the user; and
performing automatic sewing between the pattern blocks based on the sewing tag.

2. The method of claim 1, wherein the obtaining of the pattern pieces and the placement information comprises:
displaying two-dimensional (2D) pattern pieces corresponding to a result of simulation performed in a state in which the 3D virtual garment is worn.

3. The method of claim 1, further comprising:
generating a pattern block type based on a pattern block type generation input of the user.

4. The method of claim 1, wherein the pattern block generation input of the user comprises:
a specified input of the user specifying a pattern block type for each of the pattern pieces.

5. The method of claim 1, wherein the generating of the pattern blocks comprises:
updating a pattern block list in response to a pattern editing input of the user that adds a new pattern piece or replaces at least one of the pattern pieces with another pattern piece.

6. The method of claim 1, wherein the generating of the sewing tag comprises:
assigning the sewing tag to each of the pattern blocks based on a predefined tagging method.

7. The method of claim 6, wherein the assigning of the sewing tag comprises:
confirming, based on sewing relationship information of the pattern pieces and information on pattern blocks to which the pattern pieces belong, sewing relationship information of the pattern blocks; and
assigning the sewing tag to an edge area of the pattern blocks based on the sewing relationship information of the pattern blocks.

8. The method of claim 7, wherein the sewing relationship information of the pattern blocks comprises:
information for identifying pattern blocks, on which sewing between the pattern blocks is to be performed, as a pair; and
information for setting an edge area of the pattern blocks identified as being paired as an associated sewing tag.

9. The method of claim 6, wherein the predefined tagging method is
a method that comprises a processing rule for adjusting a number of sewing lines on which sewing between the pattern blocks is to be performed.

10. The method of claim 6, wherein the predefined tagging method is
a method that comprises a direction rule for adjusting a direction in which sewing between the pattern blocks is to be performed.

11. The method of claim 1, wherein the performing of the automatic sewing comprises:
performing the automatic sewing between target pattern blocks, among the pattern blocks, on which sewing is performed, in response to a pattern block editing input of the user that adds a new pattern or replaces a portion of the pattern blocks.

12. A non-transitory computer-readable storage medium storing instructions that, when executed by one or more processors, cause the one or more processors to:
obtain pattern pieces and placement information of a three-dimensional (3D) virtual garment;
generate pattern blocks from the pattern pieces based on a pattern block generation input of a user for the pattern pieces;
generate a sewing tag for the pattern blocks in response to the pattern block generation input of the user; and
perform automatic sewing between the pattern blocks based on the sewing tag.

13. A computing comprising:
an output device configured to display a user interface;
one or more processors; and
a memory storing instructions thereon, the instructions when executed by the one or more processors, cause the one or more processors to:
receive pattern pieces generated based on placement information of a three-dimensional (3D) virtual garment;
generate pattern blocks from the pattern pieces based on an input of a user for the pattern pieces;
generate a sewing tag for the pattern blocks based on the input of the user; and
perform automatic sewing between the pattern blocks based on the sewing tag.

14. A server comprising:
one or more processors; and
a memory storing instructions thereon, the instructions when executed by the one or more processors, cause the one or more processors to:
receive, from a simulation device, pattern pieces generated based on placement information of a three-dimensional (3D) virtual garment;
generate pattern blocks from the pattern pieces in response to receiving an input of a user for the pattern pieces;
generate a sewing tag for the pattern blocks based on the input of the user;
perform automatic sewing between the pattern blocks based on the sewing tag; and
transmit a result of the automatic sewing to a simulation device.
